# EUROPÄISCHE PATENTSCHRIFT

(11) **EP 3 378 006 B1**
(45) Veröffentlichungstag und Bekanntmachung des Hinweises auf die Patenterteilung: **15.07.2020**
(21) Anmeldenummer: 16801405.8
(22) Anmeldetag: 16.11.2016
(51) Int. Cl.: G06F 21/57

(54) **VERFAHREN ZUM LADEN EINES SICHEREN SPEICHERABBILDS EINES MIKROCONTROLLERS UND ANORDNUNG MIT EINEM MIKROCONTROLLER**
METHOD FOR LOADING OF A SECURE MEMORY IMAGE OF A MICROCONTROLER AND ARRANGEMENT WITH A MICROCONTROLLER
PROCÉDÉ POUR CHARGER UNNE IMAGE MÉMOIRE SÉCURISÉE D'UN MICROCONTRÔLEUR ET ARRANGEMENT AVEC UN MICROCONTRÔLEUR

(30) Priorität: 16.11.2015 DE 102015119802
(43) Veröffentlichungstag der Anmeldung: 26.09.2018
(73) Patentinhaber: Weidmüller Interface GmbH & Co. KG, 32758 Detmold (DE)
(72) Erfinder: STRÜNKMANN, Marc, 33104 Paderborn (DE); GURLT, Ingo, 33602 Bielefeld (DE); BÖCKSTIEGEL, Andreas, 33813 Oerlinghausen (DE)
(74) Vertreter: Kleine, Hubertus
(86) Internationale Anmeldenummer: PCT/EP2016/077830
(87) Internationale Veröffentlichungsnummer: WO 2017/085108

(56) Entgegenhaltungen:
- US-A- 5 893 923
- US-A1- 2013 013 906
- US-B1- 9 165 143

## Beschreibung

Die Erfindung betrifft ein Verfahren zum Laden eines sicheren Speicherabbilds für einen Startvorgang eines Mikrocontrollers aus einem externen nichtflüchtigen Speicher. Die Erfindung betrifft weiterhin eine Anordnung mit einem Mikrocontroller, die zur Durchführung des Verfahrens geeignet ist.

Nach dem Start eines Mikrocontrollers, beispielsweise nach Anlegen seiner Versorgungsspannung, wird üblicherweise ein in einem nichtflüchtigen Speicher abgelegtes Programm in einen Arbeitsspeicher des Mikrocontrollers geladen und ausgeführt. Dieses erste geladene Programm wird auch als Boot-Loader bezeichnet, da es gegebenenfalls anschließend weitere Programme mit Startroutinen lädt. Üblicherweise ist dieses Programm in der Form eines Speicherabbilds im nichtflüchtigen Speicher abgelegt. Dieses Speicherabbild wird auch als Boot-Image bezeichnet.

Insbesondere bei leistungsfähigeren Mikrocontrollern sind häufig externe nichtflüchtige Speicher vorgesehen, aus denen das Speicherabbild des ersten Startvorgangs geladen werden kann. Gegebenenfalls wird in einem solchen Fall ein zusätzliches Startprogramm in einem internen nichtflüchtigen Speicher, meist einem ROM (Read Only Memory)-Speicher, ausgeführt, dessen Aufgabe es ist, dass eigentliche Speicherabbild für den Startvorgang aus dem externen nichtflüchtigen Speicher zu laden. Die vorliegende Anmeldung bezieht sich nicht auf das Ausführen eines derartigen internen Startprogramms, sondern auf das Laden des eigentlichen Speicherbilds für den Startvorgang aus dem externen nichtflüchtigen Speicher.

Im Rahmen der vorliegenden Anmeldung ist unter einem "Mikrocontroller" sowohl ein eigenständiger Mikrocontroller zu verstehen, als auch ein Mikrocontrollers, der Teil eines Halbleiterbausteins mit zusätzlichen Komponenten ist. Derartige Halbleiterbausteine werden auch als "System on Chip" bezeichnet. Beispielsweise sind programmierbare Logikbausteine (FPGA - Field Programmable Gate Array) häufig zusammen mit einem Mikrocontroller als ein Halbleiterbaustein aufgebaut. Ein Beispiel für eine derartige Kombination von einem FPGA und einem Mikrocontroller sind die Halbleiterbausteine der "ZYNQ"-Serie der Firma XILINX, Inc. Bei diesen Systemen wird in der Regel der Mikrocontroller zunächst ebenfalls durch Laden eines Speicherabbilds gestartet und übernimmt nachfolgend die Konfiguration und Einrichtung des FPGA.

Um bei den genannten Mikrocontrollern auch bei einem fehlerhaften Speicherabbild gesichert starten zu können, ist häufig neben einem ersten Speicherabbild für den Startprozess mindestens ein zweites Speicherabbild hinterlegt, das bei einem als fehlerhaft erkannten ersten Speicherbild alternativ geladen wird.

Um Manipulationen insbesondere eines extern gespeicherten Speicherabbilds auszuschließen, ist darüber hinaus häufig die Möglichkeit des Ladens eines sicheren Speicherabbilds für den Startvorgang vorgesehen. Ein derartiges sicheres Speicherabbild wird verschlüsselt und ggf. signiert in dem externen nichtflüchtigen Speicher abgelegt und nach dem Einladen vor dem Ausführen zunächst entschlüsselt. Die Verschlüsselung sichert in Kombination mit Authentifizierungsmethoden die Integrität des Speicherabbilds.

Üblicherweise umfasst ein Speicherabbild eine Kopfinformation (Header) und die eigentlichen Abbilddaten (Datenteil). Anhand des Headers bzw. bestimmter Informationen im Header wird ein Speicherabbild identifiziert. Um erkannt werden zu können, ist auch bei einem verschlüsselten Speicherabbild der Header selbst nicht verschlüsselt, sondern nur der Datenteil. Um Manipulationen am Header ausschließen zu können, kann dieser jedoch signiert sein, d.h. mit einer Authentifizierungsinformation versehen sein, die sich wiederum Verschlüsselungstechnik bedient. Alternativ oder zusätzlich kann der Header mit einer Prüfsumme versehen sein.

Wenn bei dem Laden eines sicheren Speicherabbilds ein fehlerhafter Header bemerkt wird, kann vorgesehen sein, ein nächstes Speicherabbild zu laden, sofern ein weiteres sicheres Speicherabbild vorhanden ist. Ein Fehler kann das Resultat einer Manipulation sein, aber auch durch einen (physikalischen) Defekt des Speichermediums hervorgerufen sein oder einen nicht korrekt abgeschlossene Software-Aktualisierung ("Firmware-Update").

Wird dagegen ein fehlerfreier Header eines Speicherabbilds gefunden, ein zugehöriger Datenteil jedoch als fehlerhaft erkannt, wird der Startvorgang des Mikrocontrollers abgebrochen und der Mikrocontroller in einen sicheren verriegelten Zustand (Security Lockdown) gebracht, in dem jegliche Programmausführung unterbunden ist und der nur durch einen Neustart durch Unterbrechung der Stromversorgung des Mikrocontrollers verlassen werden kann. Diese Vorgehensweise ist beispielsweise in der Druckschrift US 9,165,143 B1 beschrieben.

Der beschriebene Sicherheitsmechanismus, der bei fehlerhaftem Datenteil eines sicheren Speicherabbilds greift, ist für hochsichere Anwendungen, wie beispielsweise in Geldautomaten angemessen, um Manipulationen möglichst sicher auszuschließen. In anderen Systemen, beispielsweise in industriellen Automatisierungsanlagen, ist zwar eine hohe Sicherheit gefordert, dass ein fehlerhaftes Speicherabbild nicht zur Ausführung gelangen darf, das Einnehmen eines Verriegelungszustands ist jedoch häufig nicht gewünscht, da Manipulationsversuche im Allgemeinen auszuschließen sind und eine hohe Verfügbarkeit des Systems Priorität vor der Unterbindung von Manipulationsversuchen hat. Daher wäre es wünschenswert, auch in diesem Fall die Möglichkeit zu haben, ein weiteres Speicherabbild zu laden, wenn Fehler im Datenteil eines zunächst geladenen Speicherabbilds festgestellt wurden.

Diese Aufgabe wird gelöst durch ein Verfahren mit den Merkmalen des unabhängigen Anspruchs. Die Aufgabe wird weiterhin durch eine Anordnung mit einem Mikrocontroller mit den Merkmalen des entsprechenden nebengeordneten Anspruchs gelöst. Vorteilhafte Ausgestaltungen und Weiterbildungen sind jeweils Gegenstand der abhängigen Ansprüche.

Ein erfindungsgemäßes Verfahren der eingangs genannten Art umfasst die folgenden Schritte:
Es wird nach einem Start des Mikrocontrollers zumindest Kopfinformationen eines ersten sicheren Speicherabbilds durch den Mikrocontroller eingelesen und analysiert, ob die Kopfinformationen fehlerhaft sind. Bei nicht fehlerhaften Kopfinformationen wird ein Datenteil des Speicherabbilds durch den Mikrocontroller eingelesen und es wird analysiert, ob der Datenteil fehlerhaft ist. Wenn der Datenteil nicht fehlerhaft ist, wird das Speicherabbild durch den Mikrocontroller ausgeführt. Wenn der Datenteil fehlerhaft ist, wird ein verriegelter Zustand eingenommen, in dem jede Programmausführung bis zu einem Neustart des Mikrocontrollers unterbunden ist.

Erfindungsgemäß wird daraufhin der verriegelte Zustand des Mikrocontrollers von einer außerhalb des Mikrocontrollers angeordnete Steuereinrichtung erfasst. Nach dem Erfassen des verriegelten Zustands werden Vorkehrungen getroffen, die zu abgewandelten eingelesener Datenwerte des Speicherabbilds bei einem nachfolgenden Leseversuch des Speicherabbilds durch den Mikrocontroller führen. Schließlich wird der Mikrocontroller zur Aufhebung des verriegelten Zustands neu gestartet, wodurch die ersten Schritte dieses Verfahrens erneut ausgeführt werden.

Erfindungsgemäß wird somit ein erneuter Startversuch des Mikrocontrollers mit geänderten Datenwerten des zuerst geladenen Speicherabbilds extern herbeigeführt.

Die veränderten Datenwerte können beispielsweise ein bezüglich der Kopfinformationen und des Datenteils korrektes nächstes Speicherabbild wiedergeben, das dann ohne weiteres im nächsten Startversuch geladen und ausgeführt wird.

Die veränderten Datenwerte können beispielsweise aber auch die Kopfinformationen des Speicherabbilds, das den fehlerhaften Datenteil aufgewiesen hat, als fehlerhaft erscheinen lassen, so dass im nächsten Startversuch zunächst ein bezüglich der Kopfinformationen fehlerhaftes Speicherabbild aufgefunden wird. Daraufhin greift der Mechanismus zum Laden eines nächsten Speicherabbilds des Mikrocontrollers, den der Mikrocontroller bei nicht lesbaren oder bei fehlerhaften Kopfinformationen durchführt.

In beiden Fällen wird das dauerhafte Verbleiben bzw. Wiedereinnehmen des verriegelten Zustands verhindert.

Das Verfahren kann durchgeführt werden, ohne die Verhaltensweise des Mikrocontrollers im Hinblick auf ein nicht korrektes Speicherabbild zu verändern. Das Verfahren kann somit von einem Anwender eines entsprechenden Mikrocontrollers in dessen Applikation ausgeführt werden, indem beispielsweise eine entsprechende Steuereinrichtung die Ansteuerung des Mikrocontrollers bzw. des externen nichtflüchtigen Speichers entsprechend vornimmt.

In einer vorteilhaften Ausgestaltung des Verfahrens umfassen die Vorkehrungen ein Manipulieren des externen nichtflüchtigen Speichers derart, dass in dem beim nächsten Leseversuch adressierten Speicherbereich ein korrektes Speicherabbild von dem Mikrocontroller ausgelesen wird. Dieses kann dadurch erfolgen, dass die in dem externen nichtflüchtigen Speicher am ursprünglichen Speicherort des korrupten Speicherabbilds ein nicht korruptes Speicherabbild, das in einem weiteren Speicher vorgehalten wird, eingeschrieben wird. Alternativ kann, wiederum durch Manipulation einer oder mehrerer Adressleitungen des nichtflüchtigen externen Speichers auf einen anderen Speicherbereich geschaltet werden, indem ein weiteres Speicherabbild vorliegt, das in einem nachfolgenden Leseversuch geladen wird. Weiterhin ist es möglich, Konfigurationseingänge des Mikrocontrollers so umzuschalten, dass dieser von sich aus von einem weiteren externen nichtflüchtigen Speicher einen Leseversuch startet. Das nächste einzulesende Speicherabbild ist dann in den weiteren nichtflüchtigen externen Speicher hinterlegt.

In einer weiteren vorteilhaften Ausgestaltung des Verfahrens umfassen die getroffenen Vorkehrungen ein Verändern von Datenwerten der Kopfinformationen des korrupten Speicherabbilds im externen nichtflüchtigen Speicher. In einer alternativen Ausgestaltung umfassen die Vorkehrungen ein Manipulieren von Adress- und/oder Dateneingängen des nichtflüchtigen externen Speichers und/oder des Mikrocontrollers, um aus dem externen nichtflüchtigen Speicher ausgelesene Datenwerte entweder temporär und/oder abhängig von ihrem Adressbereich in dem externen nichtflüchtigen Speicher zu verändern.

Durch die genannten Vorkehrungen kann erreicht werden, dass beim nächsten Leseversuch durch den Mikrocontroller Datenwerte der Kopfinformation des korrupten Speicherabbilds vom Mikrocontroller so eingelesen werden, dass sie bei einer Analyse als fehlerhaft erscheinen, bzw. dass dieses Speicherabbild vom Mikrocontroller überhaupt nicht gefunden wird. Dabei ist es zunächst unerheblich, ob sie auch im externen nichtflüchtigen Speicher selbst modifiziert werden oder zwar im Speicher unverändert sind, jedoch während des Lesevorgangs durch Veränderung bzw. Maskierung einer Daten- und/oder Adressleitung manipuliert erscheinen.

In einer weiteren vorteilhaften Ausgestaltung des Verfahrens kann vorgesehen sein, dieses Verfahren wiederholt durchzuführen, bis ein nicht korruptes Speicherabbild geladen wird oder bis kein weiteres alternatives Speicherabbild, das nicht korrupt ist, mehr vorhanden ist. Im letzteren Fall kann vorgesehen sein, an der Steuereinrichtung ein Warnsignal auszugeben oder über die Steuereinrichtung eine Warnmeldung an ein übergeordnetes Überwachungssystem zu leiten.

Eine erfindungsgemäße Anordnung mit einem Mikrocontroller, einem externen nichtflüchtigen Speicher und einer Steuereinrichtung ist zur Durchführung eines der vorgenannten Verfahren eingerichtet. Es ergeben sich die im Zusammenhang mit dem Verfahren beschriebenen Vorteile. Insbesondere kann durch die Anordnung ohne Veränderung des Mikrocontrollers anwenderseitig erreicht werden, dass auch bei einem ersten sicheren Speicherabbild mit fehlerhaftem Datenteil der Startvorgang nicht abgebrochen, sondern automatisch mit einem oder mehreren alternativen Speicherabbildern fortgesetzt wird.

Die Erfindung wird nachfolgend anhand von Ausführungsbeispielen mithilfe von Figuren näher erläutert. Die Figuren zeigen:
- Fig. 1: ein Blockschaltbild einer Anordnung mit einem Mikrocontroller;
- Fig. 2: ein Flussdiagramm eines Verfahrens zum Laden eines sicheren Speicherabbilds;
- Fig. 3: ein Blockschaltbild einer weiteren Anordnung mit einem Mikrocontroller; und
- Fig. 4: ein Flussdiagramm einer weiteren Ausgestaltung eines Verfahrens zum Laden eines sicheren Speicherabbilds.

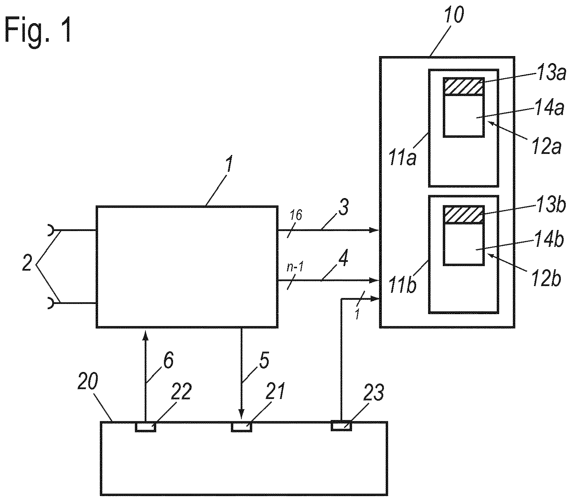

Fig. 1 zeigt in einem Blockschaltbild eine Anordnung aus einem Mikrocontroller 1 mit einem externen nichtflüchtigen Speicher 10 und einer Steuereinrichtung 20.

Der dargestellte Mikrocontroller 1 kann beispielsweise ein Mikrocontroller zur Gerätesteuerung (Embedded System) sein, der Steuerungsaufgaben für ein hier nicht dargestelltes System vornimmt. Der Mikrocontroller 1 kann integriert mit weiteren Logikschaltungen in einem Gehäuse oder auch auf einem Halbleitersubstrat aufgebaut sein (System on Chip). Die weitere Logikkomponente kann beispielsweise ein FPGA sein.

Der Mikrocontroller 1 wird über Stromversorgungsanschlüsse 2 mit einer Versorgungsspannung (GND/V+) beaufschlagt und entsprechend mit Betriebsstrom versorgt. Er weist weiterhin Anschlüsse für einen Adressbus 3 und einen Datenbus 4 auf, über die er mit dem externen nichtflüchtigen Speicher 10 verbunden ist. Adress- und Datenbus 3, 4 sind in dem vorliegenden Ausführungsbeispiel jeweils als parallele Busse ausgebildet. Der externe nichtflüchtige Speicher 10 kann beispielsweise ein FLASH-Speicher sein oder auch ein SRAM (Static Random Access Memory)- Baustein sein, der permanent mit einer Erhaltungsspannung versorgt wird. Der Mikrocontroller 1 weist weiterhin einen Ausgang auf, an dem ein Verriegelungssignal 5 ausgegeben wird.

Der Mikrocontroller 1 ist ebenso wie der nichtflüchtige externe Speicher 10 mit einer Steuereinrichtung 20 verbunden. Die Steuereinrichtung 20 umfasst einen Eingang 21 für das Verriegelungssignal 5 des Mikrocontrollers 1. Weiterhin weist die Steuereinrichtung einen Ausgang 22 für ein Neustart-Signal 6 (Reset-Signal) auf, der mit einem Neustart-Eingang (Reset) des Mikrocontrollers 1 gekoppelt ist. Über den Ausgang 22, nachfolgend auch Reset-Ausgang 22 genannt, kann die Steuereinrichtung 20 einen Neustart des Mikrocontrollers 1 erzwingen. Schließlich ist ein Adressausgang 23 vorgesehen, der mit einem Adresseingang des Speichers 10 verbunden ist.

Der externe nichtflüchtige Speicher 10 weist Anschlüsse für eine Anzahl n Adressleitungen auf, beispielsweise n=32 Adressleitungen. Dabei bilden n-1, im Beispiel also 31, dieser Adressleitungen den Adressbus 3, über den Adressen vom Mikrocontroller 1 an den nichtflüchtigen externen Speicher 10 übertragen werden. Der verbleibende Anschluss für eine Adressleitung ist mit dem Adressausgang 23 der Steuereinrichtung 20 verbunden. Dieser Anschluss stellt die höchstwertige Adressleitung für den nichtflüchtigen externen Speicher 10 dar.

Je nach logischem Pegel ("0" oder "1") an dieser Adressleitung können somit zwei unterschiedliche Speicherbereiche 11a, 11b des Speichers 10 ausgewählt werden, in denen jeweils Adressierungen der (n-1) Adressleitungen, die über den Adressbus 3 übertragen werden, einer Speicherzelle zugeordnet werden. Vorliegend sind beispielhaft Speicherzelle mit einer Breite von 16 Bit vorgesehen, die über den Datenbus 4 an den Mikrocontroller 1 übertragen werden. Die dargestellte Anordnung ermöglicht der Steuereinrichtung 20 bei Zugriff des Mikrocontrollers 1 auf den Speicher 10 zwischen den beiden Speicherbereichen 11a und 11b umzuschalten.

In jedem der Speicherbereiche 11a, 11b ist im vorliegenden Fall ein sicheres Speicherabbild 12a, 12b für einen Startvorgang des Mikrocontrollers 1 abgelegt. Jedes der Speicherabbilder 12a, 12b umfasst nicht verschlüsselte Kopfinformationen 13a, 13b, sowie jeweils einen sich anschließenden verschlüsselten Datenteil 14a, 14b.

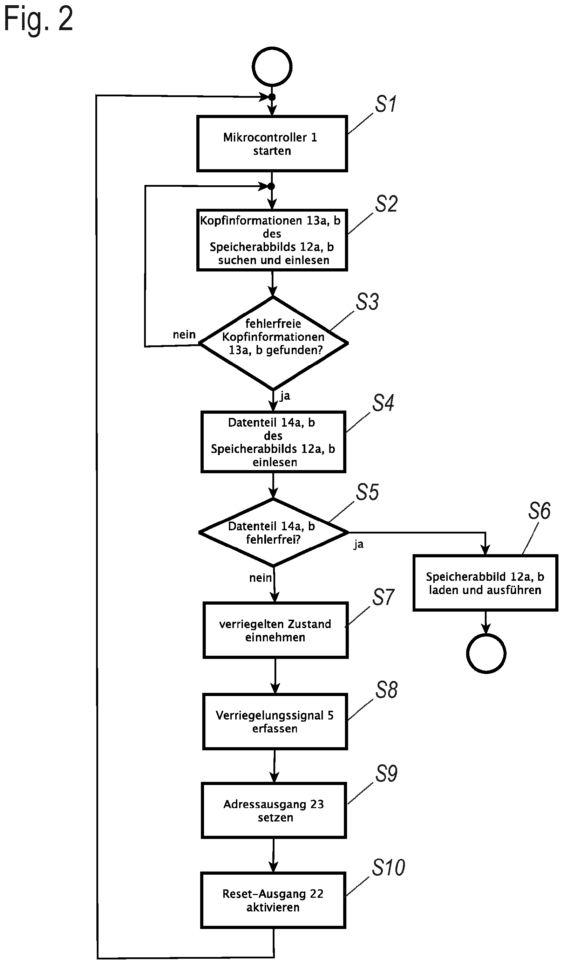

Ein Ausführungsbeispiel eines anmeldungsgemäßen Verfahrens zum Laden eines sicheren Speicherabbilds beim Startvorgang eines Mikrocontrollers wird nachfolgend im Zusammenhang mit dem Flussdiagramm der Fig. 2 näher erläutert. Das Verfahren kann beispielsweise mit der in Fig. 1 dargestellten Anordnung durchgeführt werden und wird daher beispielhaft mit Verweis auf die Elemente der Fig. 1 und unter Benutzung der dort verwendeten Bezugszeichen näher erläutert.

In einem ersten Schritt S1 wird der Mikrocontroller 1 (neu) gestartet, beispielsweise durch Aktivieren des Reset-Eingangs des Mikrocontrollers 1.

Als Folge des Neustarts des Mikrocontrollers 1 unternimmt dieser voreingestellte Schritte zum Einladen eines ersten Speicherabbilds 11a, das in dem externen nichtflüchtigen Speicher 10 abgelegt ist. Falls mehrere externe Speicher 10 vorhanden sind, kann durch in der Fig. 1 nicht dargestellte Anschlüsse vor ausgewählt werden, welcher der angeschlossenen nichtflüchtigen externen Speicher verwendet werden soll. Beispielhaft wird vorliegend davon ausgegangen, dass nur ein nichtflüchtiger externer Speicher 10 vorhanden ist, in dem das erste Speicherabbild 11a vom Mikrocontroller 1 erwartet und gesucht wird.

In einem nächsten Schritt S2 werden zumindest die Kopfinformationen 13a des ersten Speicherabbilds 11a vom Mikrocontroller 1 eingelesen. Die Kopfinformationen 13a werden in einem nächsten Schritt S3 analysiert, um festzustellen, ob diese Kopfinformationen 13a ein gültiges Speicherabbild 12a kennzeichnen. Zu diesem Zweck kann beispielsweise vorgesehen sein, eine Prüfsumme oder eine Signatur auszuwerten. Alternativ kann bei einem Auffinden einer bestimmten Datenwertefolge, die die Kopfinformationen kennzeichnet, das Vorliegen eines Speicherabbilds 12a anzunehmen.

Wenn festgestellt wird, dass die Kopfinformationen 13a fehlerhaft sind, wird ein nächstes Speicherabbild im Speicherbereich 11a gesucht.

Wenn in dem Schritt S3 festgestellt wird, dass die Kopfinformationen 13a fehlerfrei sind und ein Speicherabbild kennzeichnen, wird in einem nächsten Schritt S4 der zugehörige Datenteil 14a des Speicherabbilds 12a eingelesen und entschlüsselt. Im folgenden Schritt S5 wird überprüft, ob der Datenteil 14 korrekt, d.h. nicht manipuliert ist. Dieses kann im Rahmen der Entschlüsselung z.B. anhand von mitverschlüsselten Prüfsummen ermittelt werden.

Falls der Datenteil 14 im Schritt S5 als nicht fehlerhaft erkannt wird, verzweigt das Verfahren zu einem Schritt S6, in dem das Speicherabbild 12a dann tatsächlich in einen Arbeitsspeicher des Mikrocontrollers 1 übertragen wird (falls dieses nicht bereits zuvor im Zusammenhang mit den Schritten S4 und S5 erfolgt ist) und dort auch ausgeführt wird. Die weitere Kontrolle über den Mikrocontroller 1 übernimmt damit das sichere Speicherabbild 12a und das Verfahren ist beendet.

Falls der Datenteil im Schritt S5 dagegen als fehlerhaft erkannt wird, wird das Verfahren mit einem nächsten Schritt S7 fortgesetzt, in dem der Startvorgang des Mikrocontrollers 1 abgebrochen wird und der Mikrocontroller 1 in einen verriegelten Zustand (Secured Lockdown) versetzt wird. In dem verriegelten Zustand ist eine Programmausführung nicht möglich. Gleichzeitig gibt der Mikrocontroller 1 das Verriegelungssignal 5 an seinem entsprechenden Ausgang aus, das von der Steuereinrichtung 20 am Eingang 21 eingelesen wird. Ein Verlassen des verriegelten Zustands ist nur durch einen Neustart des Mikrocontrollers 1 möglich.
Die bislang beschrieben Schritte S1 bis S7 werden standardgemäß von dem Mikrocontroller 1 ausgeführt. Durch die nachfolgend beschrieben Schritte modifiziert anmeldungsgemäß die Steuereinrichtung 20 den Startvorgang des Mikrocontrollers 1, ohne dass dafür ein Eingriff in den Mikrocontroller 1 selbst erforderlich ist.

In einem nächsten Schritt S8 wird von der Steuereinrichtung 20 das Vorliegen des Verriegelungssignals 5 am Eingang 21 erkannt. Die Steuereinrichtung 20 überwacht zu diesem Zweck den Eingang 21 permanent, um bei einem Wechsel des Mikrocontrollers 1 in den verriegelten Zustand mit dem Schritt S7 bzw. den folgenden Schritten reagieren zu können.

Nach dem Erkennen des Wechsels in den verriegelten Zustand wird das Verfahren mit einem Schritt S9 fortgesetzt, in dem der Adressausgang 23 der Steuereinrichtung 20 vom Pegel "logisch 0" auf den Pegel "logisch 1" gesetzt wird. Die Umschaltung des Adressausgangs 23 bewirkt beim nicht flüchtigen externen Speicher 10 eine Umstellung auf den zweiten Speicherbereich 11b für alle nachfolgenden Speicheradressierungen durch den Mikrocontroller 1.

In einem nächsten Schritt S10 wird der Reset-Ausgang 22 der Steuereinrichtung 20 kurz aktiviert, wodurch der Neustart-Eingang (Reset)aktiviert wird. Als Folge davon startet der Mikrocontroller 1 erneut und beginnt wiederum mit dem Schritt S1 des Verfahrens.

Bei dem erneuten Durchlaufen des Schrittes S2 des Verfahrens greift der Mikrocontroller 1 nun im Versuch das erste Speicherabbild zu laden auf das zweite Speicherabbild 12b im zweiten Speicherbereich 11b zu, das nun im weiteren Verfahrensablauf in den Schritten S3 bis S5 eingeladen und analysiert wird. Der Zugriff auf das Speicherabbild 12b in diesem Durchlauf des Schritts S2 ist auf den Eingriff der Steuereinrichtung 20 auf den externen nichtflüchtigen Speicher 10 über den Adressausgang 23 zurückzuführen.

In der Annahme, dass in diesem Fall das Speicherabbild 12b sowohl bezüglich der Kopfinformationen 13b, als auch bezüglich des Datenteils 14b korrekt ist, wird das Speicherabbild 12b vollständig vom Mikrocontroller 1 entschlüsselt und in den Arbeitsspeicher eingeladen, von dem aus es in dem Schritt S6 ausgeführt wird.

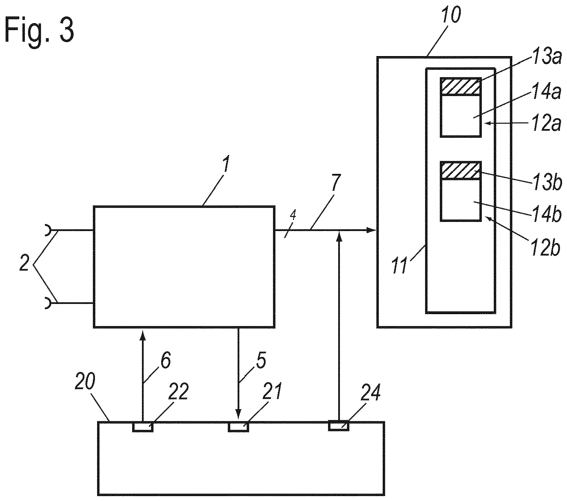

In Fig. 3 ist ein weiteres Ausführungsbeispiel einer Anordnung mit einem Mikrocontroller 1 und einem externen Speicher 10 sowie einer Steuereinrichtung 20 analog zu Fig. 1 in einem Blockschaltbild dargestellt. Bezüglich der grundsätzlichen Anordnung und Eigenschaften der Komponenten wird auf das Ausführungsbeispiel der Fig. 1 verwiesen. Unterschiede gegenüber diesem Ausführungsbeispiel werden nachfolgend beschrieben.

Das Ausführungsbeispiel der Fig. 3 unterscheidet sich von dem Ausführungsbeispiel der Fig. 1 darin, dass der externe nichtflüchtige Speicher 10 nicht über einen parallelen Adressbus 3 bzw. Datenbus 4 mit dem Mikrocontroller 1 gekoppelt ist, sondern über einen seriellen Bus 7, der sowohl Adress-, als auch Dateninformationen überträgt. Beispielsweise weist der serielle Bus 7 vier Leitungen auf, von denen zwei einer Stromversorgung des externen Speichers 10 dienen und zwei Leitungen Datenleitungen mit differenzieller Signalübertragung darstellen.

Im Speicher 10 ist vorliegend nur ein Speicherbereich 11 verfügbar, in dem hier zwei Speicherabbilder 12a, 12b für den Startvorgang des Mikrocontrollers 1 nacheinander abgespeichert sind. Wiederum weist jedes der Speicherabbilder 12a, 12b Kopfinformationen 13a, 13b und einen zugeordneten Datenteil 14a, 14b auf. Es wird darauf hingewiesen, dass auch mehr als die zwei dargestellten Speicherabbilder nacheinander im Speicherbereich 11 abgelegt sein können.

Die extern vom Mikrocontroller 1 und vom externen Speicher 10 ausgebildete Steuereinrichtung 20 weist in Übereinstimmung des Ausführungsbeispiels der Fig. 1 wiederum einen Eingang 21 zum Auslesen des Verriegelungssignals 5 des Mikrocontrollers 1 auf und einen Reset-Ausgang 22 für ein Reset-Signal 6, das dem Mikrocontroller 1 zugeführt wird.

Anstelle des Adressausgangs 23, der beim Ausführungsbeispiel der Fig. 1 der Umschaltung von Speicherbereich diente, ist ein Datenanschluss 24 beim Ausführungsbeispiel der Fig. 3 vorgesehen, der die Datenleitungen des seriellen Busses 7 kontaktiert. Über diesen Datenanschluss 24 kann der Datenverkehr auf dem seriellen Bus 7 einlesen und damit überwacht werden und es kann manipulierend auf die Datenleitungen und damit den Datenverkehr auf dem seriellen Bus 7 eingegriffen werden.

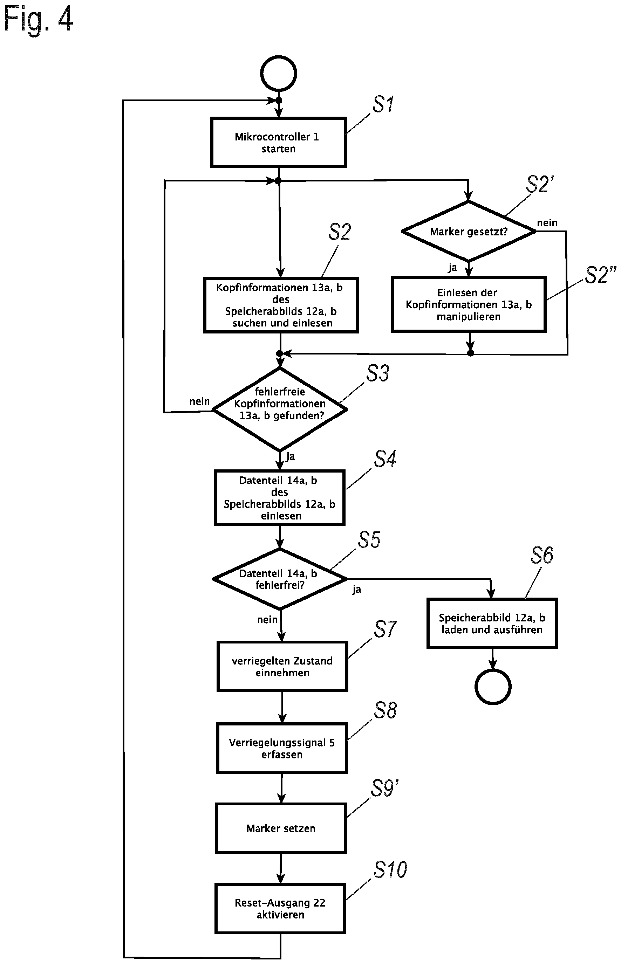

Fig. 4 zeigt analog zu Fig. 2 eine Ausgestaltung eines Verfahrens zum Laden eines sicheren Speicherabbilds, das zur Ausführung mit der Anordnung gemäß Fig. 3 geeignet ist. Das Verfahren ist in Fig. 4 vergleichbar mit Fig. 2 in einem Flussdiagramm dargestellt. Schritte, die in beiden Ausführungsbeispielen gleich ablaufen, sind in beiden Figuren gleich benannt. Schritte, die unterschiedlich sind, bzw. die beim Ausführungsbeispiel der Fig. 4 gegenüber dem der Fig. 2 hinzugekommen sind, sind durch ein- oder zwei Apostrophs gekennzeichnet. Im Hinblick auf die aus Fig. 2 bekannten Schritte wird hiermit explizit auf die Beschreibung zur Fig. 2 verwiesen.

Wiederum startet das Verfahren mit dem Schritt S1, in dem der Mikrocontroller 1 startet.

In dem nachfolgenden Schritt S2 sucht der Mikrocontroller 1 im Speicherbereich 11, beginnend am Anfang des Speicherbereichs 11, nach Kopfinformationen 13a, 13b, die ein Speicherabbild 12a, 12b kennzeichnen. Werden derartige Kopfinformation 13a, 13b gefunden, werden zumindest die Kopfinformationen 13a, 13b in alternativen Ausgestaltungen auf das gesamte Speicherabbild 12a, 12b eingelesen.

In einem nachfolgenden Schritt S3 wird überprüft, ob die eingelesenen Kopfinformationen 13a, 13b fehlerfrei sind, falls nicht, verzweigt das Verfahren zurück zum Schritt S2, in dem der Speicherbereich 11 weiter auf das Vorliegen weiterer Kopfinformationen, beispielsweise der Kopfinformation 13b durchsucht wird.

Parallel zum Schritt S2 werden von der Steuereinrichtung 20 die Schritte S2' und gegebenenfalls S2" ausgeführt. In dem Schritt S2' überprüft die Steuereinrichtung 20, ob ein Marker (Flag) gesetzt ist. Dieser Marker gibt an, ob der Mikrocontroller 1 in einem zuvor ausgeführten Startversuch den verriegelten Zustand eingenommen hat. Ist dies nicht der Fall, wird der nachfolgende Schritt S2" übersprungen.

In einem ersten Durchlauf des dargestellten Verfahrens ist dieser Marker nicht gesetzt. Der Schritt S2" wird daher nicht ausgeführt.

Im Schritt S4 wird analog zum Verfahren der Fig. 2 der zum Speicherabbild 12a, 12b zugehörige Datenteil 14a, 14b eingeladen, der im Schritt S5 überprüft wird. Ist der Teil korrekt, wird das entsprechende Speicherabbild 12a, 12b im Schritt S6 in den internen Arbeitsspeicher des Mikrocontrollers 1 übernommen und ausgeführt.

Ist der Datenteil 14a, 14b nicht korrekt, geht der Mikrocontroller 1 in dem Schritt S7 in den Verriegelungszustand, der anhand des Verriegelungssignals 5 im Schritt S8 von der Steuereinrichtung 20 erfasst wird.

Im Schritt S9', der diesem Ausführungsbeispiel anstelle des Schrittes S9 des Ausführungsbeispiels der Fig. 2 ausgeführt wird, wird der im Zusammenhang mit dem Schritt S2' erwähnte Marker gesetzt, um beim nachfolgenden Startvorgang nachvollziehen zu können, dass der letzte Startvorgang des Mikrocontrollers 1 in dem verriegelten Zustand endete. Wieder analog zum Verfahren der Fig. 2 wird im nachfolgenden Schritt S10 der Reset-Ausgang 22 aktiviert, um den Mikrocontroller 1 neu zu starten und damit das Verfahren in einem erneuten Durchlauf beim Schritt S1 zu beginnen.

In dem folgenden Schritt S2 des erneuten Durchlaufs sucht der Mikrocontroller 1, der selbst keine Informationen über den zurückliegenden verriegelten Zustand hat, wiederum im Speicherbereich 11 nach Kopfinformationen 13a, 13b eines Speicherabbilds 12a, 12b.

In den parallel ausgeführten Schritten der Steuereinrichtung 20 erkennen diese im Schritt S2', dass der den zuvor eingenommenen verriegelten Zustand anzeigende Marker gesetzt ist und führt den Schritt S2" aus. In diesem Schritt S2" wird der Zugriff des Mikrocontrollers 1 auf den externen nichtflüchtigen Speicher 10 über den Datenanschluss 24 überwacht. Anhand dieser Überwachung ermittelt die Steuereinrichtung 20, dass der Mikrocontroller 1 die zuerst im Speicherbereich 11 liegenden Kopfinformationen 13a vom Speicher 10 anfragt. Während vom Speicher 10 die Kopfinformationen 13a an den Mikrocontroller 1 ausgegeben werden, manipuliert die Speichereinrichtung 20 über den Datenanschluss 24, der nunmehr als Ausgang eingesetzt wird, Signale auf dem seriellen Bus 7. Als Folge werden die Kopfinformationen 13a im Schritt S3 nicht als korrekte Kopfinformationen erkannt, woraufhin das Verfahren im Schritt S2 nach weiteren im Speicherbereich 11 angeordneten Kopfinformationen sucht und folglich die Kopfinformationen 13b auffindet.

Ein Zugriff auf die Kopfinformationen 13b wird von der Steuereinrichtung 20 nicht manipuliert. Entsprechend werden diese Kopfinformationen 13b als fehlerfrei erkannt und im Schritt S4 der entsprechende Datenteil 14b nachgeladen. In der Annahme das dieser nunmehr korrekt ist, verzweigt das Verfahren vom Schritt S5 zum Schritt S6, wo nunmehr das Speicherabbild 12b eingeladen und ausgeführt wird.

Gegebenenfalls kann vorgesehen sein, das Verfahren bei fehlerhaftem zweiten Speicherabbild 12b erneut zu durchlaufen, wobei bei dem erneuten Durchlauf im Schritt S2' das Einlesen beider Kopfinformationen 13a, 13b manipuliert würde, um ein gegebenenfalls vorhandenes drittes Speicherabbild einzuladen. In diesem Fall wäre nicht ein einzelner Marker vorzusehen, sondern mehrere Marker, die das Verhalten des Mikrocontrollers 1 (wurde der verriegelte Zustand eingenommen oder nicht?) für jedes oder zumindest eine bestimmte Anzahl von Speicherabbildern 12a, 12b wiedergeben.

Bei dem in Fig. 4 dargestellten Verfahren werden somit die Datenströme beim Auslesen des externen Speichers 10 manipuliert, um ein Speicherabbild, das andernfalls zum Einnehmen des verriegelten Zustands führen würde, vom Mikrocontroller 1 gar nicht erkannt wird und dieser somit gemäß seiner internen vorgesehenen Suchroutine ein weiteres Vorliegen des Speicherabbild sucht und findet.

Alternativ zu dem dargestellten Verfahren können andere Methoden verwendet werden, durch die ein korruptes Speicherabbild vom Mikrocontroller 1 gar nicht erst gefunden wird, beispielsweise eine Manipulation von Adresswerten beim Speicherzugriff.

### Bezugszeichen

- 1: Mikrocontroller
- 2: Stromversorgungsanschluss
- 3: Adressbus
- 4: Datenbus
- 5: Verriegelungssignal
- 6: Neustart-Signal
- 7: serieller Bus

- 10: externer nichtflüchtiger Speicher
- 11 (a,b): Speicherbereich
- 12 a,b: Speicherabbild
- 13 a,b: Kopfinformationen
- 14 a,b: Datenteil

- 20: Steuereinrichtung
- 21: Eingang
- 22: (Reset-) Ausgang
- 23: Adressausgang
- 24: Datenanschluss

- S1-S10: Verfahrensschritte
- S2', S2", S9': Verfahrensschritte

## Patentansprüche

1. Verfahren zum Laden eines sicheren Speicherabbilds für einen Startvorgang eines Mikrocontrollers (1) aus einem externen nichtflüchtigen Speicher (10), mit den folgenden Schritten:
- Einlesen von zumindest Kopfinformationen (13a, 13b) eines sicheren Speicherabbilds (12a, 12b) durch den Mikrocontroller (1) nach einem Start des Mikrocontrollers (1);
- Analysieren, ob die Kopfinformationen (13a, 13b) fehlerhaft sind;
- Einlesen ein Datenteils (14a, 14b) des Speicherabbilds (12a, 12b) durch den Mikrocontroller (1) falls die Kopfinformationen (12a, 12b) nicht fehlerhaft sind und analysieren, ob der Datenteil (14a, 14b) fehlerhaft ist;
- Ausführen das Speicherabbilds (12a, 12b) durch den Mikrocontroller, wenn der Datenteil (14a, 14b) nicht fehlerhaft ist; und
- Einnehmen eines verriegelter Zustands, in dem jede Programmausführung bis zu einem Neustart des Mikrocontrollers (1) unterbunden ist, wenn der Datenteil (14a, 14b) fehlerhaft ist;
**gekennzeichnet durch** die weiteren Schritten:
- Erfassen des verriegelten Zustands des Mikrocontrollers (1) von einer außerhalb des Mikrocontrollers (1) angeordneten Steuereinrichtung (20)
- Treffen von Vorkehrungen, die zu abgewandelten eingelesenen Datenwerten des Speicherabbilds (12a, 12b) bei einem nachfolgenden Leseversuch des Speicherabbilds (12a, 12b) durch den Mikrocontroller (1) führen; und
- Herbeiführen eines Neustarts des Mikrocontrollers (1) zur Aufhebung des verriegelten Zustands und zur erneuten Durchführung zumindest der ersten fünf Schritte dieses Verfahrens.

2. Verfahren nach Anspruch 1, bei dem die Vorkehrungen ein Manipulieren des externen nichtflüchtigen Speichers (10) umfassen, derart, dass bei einem erneuten Leseversuch von dem Mikrocontroller (1) adressierten Speicherbereich (10a, 10b) ein korrektes Speicherabbild (12a, 12b) von dem Mikrocontroller (1) ausgelesen wird.

3. Verfahren nach Anspruch 2, bei dem das nicht korrekte Speicherabbild (12a, 12b) in den externen nichtflüchtigen Speicher (10) mit einem anderen der Speicherabbilder (12a, 12b) überschrieben wird.

4. Verfahren nach Anspruch 2, bei dem Adresseingänge des externen nichtflüchtigen Speicher (10) so beschaltet werden, so dass bei dem erneuten Leseversuch von dem Mikrocontroller (1) ein Adresszugriff des Mikrocontrollers (1) in einen anderen Speicherbereich (10a, 10b) und damit zu einem anderen der Speicherabbilder (12a, 12b) umgeleitet wird.

5. Verfahren nach Anspruch 2, bei dem Konfigurationseingänge des Mikrocontrollers (1) so umgeschaltet werden, dass dieser bei dem erneuten Leseversuch von sich aus ein anderes der Speicherabbilder (12a, 12b) von einem weiteren externen nichtflüchtigen Speicher einliest.

6. Verfahren nach Anspruch 1, bei dem die getroffenen Vorkehrungen ein Verändern der eingelesenen Datenwerten der Kopfinformationen (13a, 13b) des fehlerhaften Speicherabbilds (12a, 12b) in dem externen nichtflüchtigen Speicher (10) umfassen, derart, dass die eingelesenen Kopfinformationen (13a, 13b) fehlerhaft erscheinen.

7. Verfahren nach Anspruch 6, bei dem die Datenwerte der Kopfinformationen (13a, 13b) des fehlerhaften Speicherabbilds (12a, 12b) selbst im nichtflüchtigen externen Speicher (10) verändert werden.

8. Verfahren nach Anspruch 6, bei dem Adress- und/oder Dateneingängen des nichtflüchtigen externen Speichers (10) derart beschaltet werden, dass mindestens ein Datenwert der Kopfinformationen (14a, 14b) verändert durch den Mikrocontroller (1) aus dem externen nichtflüchtigen Speicher (10) ausgelesen wird.

9. Verfahren nach Anspruch 8, bei dem die Adress- und/oder Dateneingängen des nichtflüchtigen externen Speichers (10) entweder temporär und/oder abhängig von dem Adressbereich beschaltet werden.

10. Verfahren nach einem der Ansprüche 1 bis 9, bei dem das Verfahren nach einem der Ansprüche 1 bis 9 wiederholt wird, bis entweder ein nicht fehlerhaftes Speicherabbild (12a, 12b) geladen wird oder bis alle vorliegenden Speicherabbilder (12a, 12b) eingelesen und analysiert sind.

11. Verfahren nach Anspruch 10, bei dem ein Warnsignal oder eine Warnmeldung ausgegeben wird, wenn kein nicht fehlerhaftes Speicherabbild (12a, 12b) gefunden wird.

12. Anordnung mit einem Mikrocontroller (1), einem externen nichtflüchtigen Speicher (10) und einer Steuereinrichtung (20), die zur Durchführung eines Verfahrens nach einem der Ansprüche 1 bis 11 eingerichtet ist.

## Claims

1. A process for loading a secure memory image for a startup procedure of a microcontroller (1) from an external non-volatile memory (10), comprising the following steps:
- starting of the microcontroller (1), and reading by the microcontroller (1) of at least the header information (13a, 13b) of a secure memory image (12a, 12b);
- analyzing the header information (13a, 13b) to determine whether it is faulty;
- if the header information (12a, 12b) is error-free, reading by the microcontroller (1) of a data section (14a, 14b) of the memory image (12a, 12b) and analyzing the data section (14a, 14b) to determine whether it is faulty;
- if the data section (14a, 14b) is error-free, executing the memory image (12a, 12b) by the microcontroller; and
- if the data section (14a, 14b) is faulty, placement of the system in a locked state in which execution of any program is prevented pending a restart of the microcontroller (1);
**characterized by** the following additional steps:
- detection of the locked state of the microcontroller (1) by a controller (20) located outside of the microcontroller (1)
- institution of precautionary measures that lead to modified read-in data values of the memory image (12a, 12b) in a subsequent attempt by the microcontroller (1) to read the memory image (12a, 12b); and
- initiation of a restart of the microcontroller (1) to cancel the locked state and to repeat at least the first five steps of this process.

2. The process according to Claim 1, wherein the precautionary measures include manipulating the external non-volatile memory (10) such that during a renewed attempt by the microcontroller (1) to read the addressed memory area (10a, 10b), a correct memory image (12a, 12b) will be read out by the microcontroller (1).

3. The process according to Claim 2, wherein the incorrect memory image (12a, 12b) is overwritten in the external nonvolatile memory (10) by another of the memory images (12a, 12b).

4. The process according to Claim 2, wherein address inputs of the external non-volatile memory (10) are connected in such a way that during the renewed read attempt by the microcontroller (1), an address access by the microcontroller (1) will be redirected to another memory area (10a, 10b) and thus to another of the memory images (12a, 12b).

5. The process according to Claim 2, wherein configuration inputs of the microcontroller (1) are switched such that during the renewed read attempt, the microcontroller will read in another of the memory images (12a, 12b) from another external non-volatile memory.

6. The process according to Claim 1, wherein the precautionary measures instituted comprise modifying the read-in data values of the header information (13a, 13b) of the faulty memory image (12a, 12b) in the external non-volatile memory (10), in such a way that the read-in header information (13a, 13b) appears to be faulty.

7. The process according to Claim 6, wherein the data values of the header information (13a, 13b) of the faulty memory image (12a, 12b) are modified in the non-volatile external memory (10).

8. The process according to Claim 6, wherein address and/or data inputs of the non-volatile external memory (10) are connected in such a way that at least one data value of the header information (14a, 14b) that has been modified by the microcontroller (1) is read out from the external non-volatile memory (10).

9. The process according to Claim 8, wherein the address and/or data inputs of the non-volatile external memory (10) are connected temporarily and/or dependent upon the address range.

10. The process according to any of Claims 1 to 9, wherein the process according to any of claims 1 to 9 is repeated until either an error-free memory image (12a, 12b) is loaded or all existing memory images (12a, 12b) have been read in and analyzed.

11. The process according to Claim 10, wherein an alert signal or an alert message is output when no error-free memory image (12a, 12b) is found.

12. An arrangement comprising a microcontroller (1), an external non-volatile memory (10) and a controller (20), configured to implement a process according to any of Claims 1 to 11.

## Revendications

1. Procédé de chargement d'une image mémoire sûre pour un processus de démarrage d'un microcontrôleur (1) à partir d'une mémoire non volatile externe (10), comprenant les étapes consistant à :
- lire au moins les informations d'en-tête (13a, 13b) d'une image mémoire sûre (12a, 12b) par le microcontrôleur (1) après un démarrage du microcontrôleur (1);
- analyser si les informations d'en-tête (13a, 13b) sont défectueuses ;
- lire une partie données (14a, 14b) de l'image mémoire (12a, 12b) par le microcontrôleur (1) si les informations d'en-tête (12a, 12b) ne sont pas défectueuses et analyser si la partie données (14a, 14b) est défectueuse ;
- exécuter l'image mémoire (12a, 12b) par le microcontrôleur si la partie données (14a, 14b) n'est pas défectueuse ; et
- prendre un état verrouillé dans lequel toute exécution de programme est empêchée jusqu'à un redémarrage du microcontrôleur (1) si la partie données (14a, 14b) est défectueuse ;
**caractérisé par** les étapes consistant à :
- détecter l'état verrouillé du microcontrôleur (1) à partir d'un dispositif de commande (20) disposé à l'extérieur du microcontrôleur (1),
- prendre des mesures qui conduisent à des valeurs de données lues modifiées de l'image mémoire (12a, 12b) lors d'une tentative suivante de lecture de l'image mémoire (12a, 12b) par le microcontrôleur (1) ; et
- effectuer un redémarrage du microcontrôleur (1) pour annuler l'état verrouillé et pour exécuter à nouveau au moins les cinq premières étapes de ce procédé.

2. Procédé selon la revendication 1, dans lequel les mesures comprennent une manipulation de la mémoire non volatile externe (10) de telle sorte qu'une image mémoire correcte (12a, 12b) soit lue par le microcontrôleur (1) lors d'une nouvelle tentative de lecture de la zone de mémoire (10a, 10b) adressée par le microcontrôleur (1).

3. Procédé selon la revendication 2, dans lequel l'image mémoire incorrecte (12a, 12b) est remplacée dans la mémoire non volatile externe (10) par une autre des images mémoire (12a, 12b).

4. Procédé selon la revendication 2, dans lequel des entrées d'adresse de la mémoire non volatile externe (10) sont câblées de telle manière que, lors de la nouvelle tentative de lecture par le microcontrôleur (1), un accès à une adresse du microcontrôleur (1) soit dévié dans une autre zone de mémoire (10a, 10b) et donc vers une autre des images mémoire (12a, 12b).

5. Procédé selon la revendication 2, dans lequel des entrées de configuration du microcontrôleur (1) sont commutées de telle manière que, lors de la nouvelle tentative de lecture, celui-ci lit par lui-même une autre des images mémoire (12a, 12b) à partir d'une autre mémoire non volatile externe.

6. Procédé selon la revendication 1, dans lequel les mesures prises comprennent une modification des valeurs de données lues des informations d'en-tête (13a, 13b) de l'image mémoire défectueuse (12a, 12b) dans la mémoire non volatile externe (10), de telle sorte que les informations d'en-tête lues (13a, 13b) apparaissent défectueuses.

7. Procédé selon la revendication 6, dans lequel les valeurs de données des informations d'en-tête (13a, 13b) de l'image mémoire défectueuse (12a, 12b) elle-même sont modifiées dans la mémoire non volatile externe (10).

8. Procédé selon la revendication 6, dans lequel des entrées d'adresses et/ou de données de la mémoire non volatile externe (10) sont câblées de telle sorte qu'au moins une valeur de données des informations d'en-tête (14a, 14b) soit lue sous une forme modifiée dans la mémoire non volatile externe (10) par le microcontrôleur (1).

9. Procédé selon la revendication 8, dans lequel les entrées d'adresses et/ou de données de la mémoire non volatile externe (10) sont câblées temporairement et/ou en fonction de la plage d'adresses.

10. Procédé selon l'une des revendications 1 à 9, dans lequel le procédé selon l'une des revendications 1 à 9 est répétée jusqu'à ce qu'une image mémoire non défectueuse (12a, 12b) soit chargée ou jusqu'à ce que toutes les images mémoire (12a, 12b) existantes aient été lues et analysées.

11. Procédé selon la revendication 10, dans lequel un signal d'avertissement ou un message d'avertissement est émis si aucune image mémoire (12a, 12b) non défectueuse n'a été trouvée.

12. Agencement comprenant un microcontrôleur (1), une mémoire non volatile externe (10) et un dispositif de commande (20) qui est configuré pour mettre en œuvre un procédé selon l'une des revendications 1 à 11.
